# EUROPEAN PATENT SPECIFICATION

(11) **EP 0 618 687 B1**
(45) Date of publication and mention of the grant of the patent: **05.12.2001**
(21) Application number: 94302112.1
(22) Date of filing: 24.03.1994
(51) Int. Cl.: H04B 7/01

(54) **Phase correction for radio receiver based an training sequence**
Phasenkorrektion für einen Funkempfänger auf der Basis einer Trainingsfolge
Correction de phase pour un récepteur radio basée sur une séquence d'apprentisage

(30) Priority: 30.03.1993 JP 9682693
(43) Date of publication of application: 05.10.1994
(73) Proprietor: SONY CORPORATION, Tokyo (JP)
(72) Inventor: Ozaki, Shinji, c/o Sony Corporation, Shinagawa-ku, Tokyo (JP)
(74) Representative: Nicholls, Michael John

(56) References cited:
- EP-A- 0 371 357
- WO-A-92/04783

## Description

This invention relates to a radio receiver apparatus and more particularly, to a method for phase correction thereof.

Conventionally, in a digital cellular system being one type of radio telephone, a voice signal is transmitted and received in a coded manner so that a channel can be used simultaneously by a plurality of terminal devices by applying the technique of time-division multiplex.

When power is made, a terminal device of this type sequentially scans 124 channels previously set to detect a channel at which the electric field strength is most intense.

The terminal device thereby detects a BCCH (broadcast control channel) assigned to an area to which the terminal device belongs and receives such BCCH.

The BCCH has time slots through which various information are transmitted. In the digital cellular system BCCH each terminal device receives BCCH so as to transmit information from the base station which transmits the BCCH, information on neighboring base stations and access information of terminal devices.

Thus, the terminal device detects an FCCH (frequency correction channel) which is included within the BCCH at a predetermined timing, to thereby generally detect a timing at which the necessary information is transmitted on the basis of the FCCH.

The FCCH is a synchronizing signal to which a bit pattern is assigned so that, data of the value "1" continues for a predetermined number of bits when demodulated. The terminal device detects timing of the FCCH to synchronize, i.e., frame synchronize, its overall operation with the timing of a received data S.

Further, upon attaining frame synchronization by the FCCH in this manner, the terminal device synchronizes its overall operation with bursts.

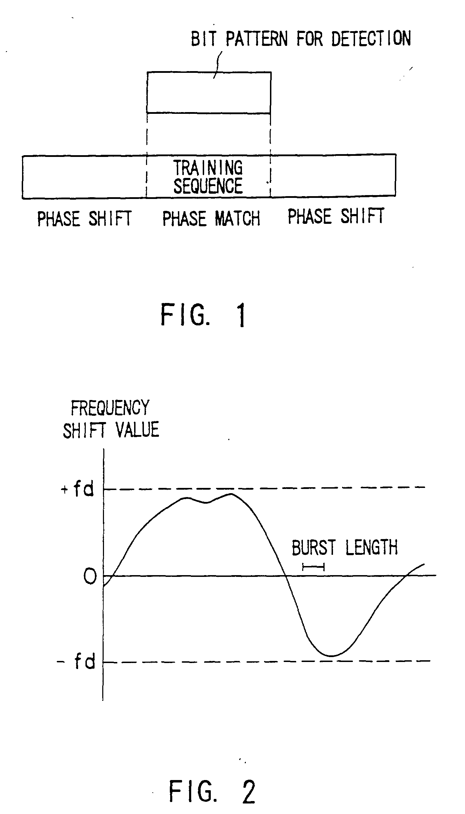

Here, a burst is output onto the BCCH at a predetermined timing and, as shown in Fig. 1, a training sequence is put in at substantially the center thereof. The training sequence is formed by repeating data of value "1" and value "0" in a previously set bit pattern, whereas the FCCH is formed by assigning a bit pattern so that data of value "1" continues for a predetermined number of bits.

This type of digital cellular system generally synchronize its overall operation with the received data on the basis of the FCCH, and synchronize the overall operation by bit on the basis of the training sequence.

In particular, by detecting a correlation between a predetermined bit pattern and a received data, the terminal device detects a timing at which the correlation value rises so as to detect the timing of a training sequence. Thereby, the terminal device detects the timing of the received data by bit, and synchronizes its overall operation with a burst by controlling the overall operation on the basis of the detection result of the correlation value.

The terminal device monitors the BCCH so that, upon detection of an access information from the base station, it is capable of communicating with a desired destination of communication by shifting to a designated channel. Then, on the basis of a comparison result with the receiving result of the BCCH of a neighboring base station, the terminal device switches the BCCH to be received, so that, even in case of moving into a neighboring area, the communication can be secured.

As shown in Fig. 2, a received data received at this type of terminal device is characterized by continuous fluctuation in its frequency due to an effect of fading.

Such fluctuation in frequency tends to be large in comparison with a burst and a state of frequency changed only by a certain value is maintained within one burst.

For this reason, in the case where data is processed at the terminal device by detecting the timing of a training sequence, even though data can be processed at a timing synchronized in phase with the received data within the training sequence, a phase shift between the timing of data processing and the timing of the received data may occur at the both ends of a burst which are distant from the training sequence.

In this case, bit error rate increases at the both ends of the burst, thereby it will be difficult to receive a correct data.

Further, since this type of terminal device is formed as a superheterodyne system, a similar state occurs also in the case where a frequency offset of the local oscillating signal occurs.

In this case, for example, a method can be considered of correcting this type of phase shift by generating a clock for a reference in received data processing at a PLL circuit formed as an analog circuit. However in this case, there is a problem that the overall construction become intricated and complicated and reliability thereof is also reduced since noise is increased and it is impossible to completely prevent from aged deterioration of the elements forming the circuit.

On the other hand, another method can be also considered of estimating the amount of change in frequency by sequentially detecting the amount of phase shift so as to switch timing of data processing by the estimation result. However in this case, there is a disadvantage that operational processing becomes intricate and there can be a case of erroneously estimating the frequency, so that, it is apprehended that these problem cause of a serious communication failure.

Furthermore, in this case where the amount of phase shift is actually detected, there is also a disadvantage that the phase shift with respect to the burst itself which is utilized in the detection cannot be corrected by the detection result.

WO 92/04783 discloses an apparatus for determining the approximate frequency deviation in digital communications channel. In the receiver, the signal is compressed in matched filters, each in a simultaneous frequency-shifted Doppler channel.

EP-A-0,371,357 discloses a method for determining the reception time of a signal containing a Barker code. The signal is correlated with a corresponding code stored in memory at different offsets in time from which the correlation code can be reduced and the apex determined.

It is, therefore, an object of the present invention to provide a radio receiver apparatus which resolves the above-mentioned problem.

It is another aim of the present invention to provide a method for phase shift correction of the radio receiver apparatus which resolves the above-mentioned problem.

According to the present invention, there is provided a radio receiver apparatus for receiving a transmission signal in which a reference pattern occurs at a predetermined timing, the apparatus comprising:
receiving means for receiving and demodulating said transmission signal to output a received data signal;
phase shift information detection means for detecting first phase shift information between said received data signal and said reference pattern; and
received data processing means for processing said received data signal with reference to said first phase shift information so as to synchronise said receiver apparatus to said reference pattern; characterised in that:
   said phase shift information detection means is further operative, after having detected said first phase shift information, to delay and advance said received data signal in phase and to detect second phase shift information between said reference pattern and said received data signal having been delayed and advanced in phase; and by
   phase shift correction means for correcting first phase shift information supplied to said received data processing means on the basis of a comparison between said first and second phase shift information.

According to the present invention there is also provided a method of phase correction, for use in a radio receiver apparatus for receiving a transmission signal in which a reference pattern occurs at a predetermined timing; the method comprising the steps of:
receiving and demodulating said transmission signal into a received data signal;
detecting first phase shift information between said received data signal and said reference pattern;
processing said received data signal on the basis of said first phase shift information; characterised by:
   after said step of detecting first shift information, detecting said second phase shift information between said reference pattern and said received data; and
   correcting the phase of said received data signal on the basis of said first and second phase shift information.

In accordance with this invention, a phase shift information is detected on the basis of a reference pattern put in a transmission signal, and furthermore a phase shift information is detected further by shifting phase of the received data to correct the phase shift of received data based on a comparison result of the phase shift information, thereby it is possible to provide a radio receiver apparatus and a method for the phase correction of radio receiver apparatus in which the phase shift of the receiving data can be corrected in a simple and secure manner.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a schematic diagram explaining a training sequence;
Fig. 2 is a characteristic curve explaining fluctuation in frequency due to fading;
Fig. 3 is a block diagram showing a terminal device of a digital cellular system as a radio receiver apparatus according to an embodiment of this invention;
Fig. 4 is a flowchart explaining the phase correction;
Fig. 5 is a flowchart explaining a second embodiment of a radio receiver apparatus according to this invention;
Figs. 6A to 6C are schematic diagrams explaining the case where the second and the third correlation value detection results thereof are equal to each other;
Figs. 7A and 7B are schematic diagrams explaining the case where the second correlation value detection result is the smallest;
Figs. 8A and 8B are schematic diagrams explaining the case where the third correlation value detection result is the smallest;
Figs. 9A and 9B are schematic diagrams explaining the case where the second correlation value detection result is the largest;
Fig. 10 is a schematic diagram explaining the case where the second, the first, and the third correlation value detection results become sequentially smaller in that order;
Fig. 11 is a schematic diagram explaining a case where the change from the first correlation value detection result to the third correlation value detection result is relatively larger;
Figs. 12A and 12B are schematic diagrams explaining the case where the third correlation value detection result is the largest;
Fig. 13 is a schematic diagram explaining the case where the third, the first, and the second correlation value detection results become sequentially smaller in that order;
Fig. 14 is a schematic diagram explaining a case where the change from the first correlation value detection result to the third correlation value detection result is relatively larger;
Fig. 15 is a schematic diagram explaining a temporary detection of phase shift direction;
Figs. 16A and 16B are schematic diagrams explaining a distribution of detection results of phase shift direction;
Fig. 17 is a schematic diagram showing the construction of the memory; and
Fig. 18 is a flowchart explaining operation of a third embodiment of the radio receiver apparatus according to the present invention.

### DETAILED DESCRIPTION OF THE EMBODIMENT

Preferred embodiments of the radio receiver apparatus in accordance with this invention will be described with reference to the accompanying drawings:

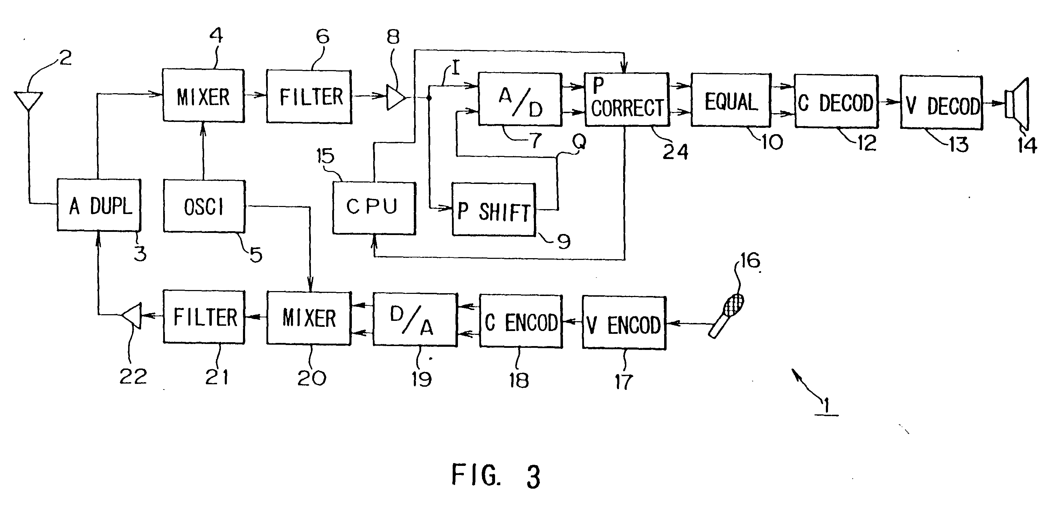

In Fig. 3, 1 denotes generally a block diagram of a terminal device of a digital cellular system. The terminal device 1 receives a transmission signal transmitted from a base station at an antenna 2 and the received signal is outputted to a mixer 4 through an antenna duplexer 3.

The mixer 4 effects a frequency conversion of the received data by means of a local oscillating signal output from an oscillating section 5 and then outputs it through a filter 6, thereby the terminal device 1 can selectively receive a desired channel by switching frequency of the local oscillating signal.

The output signal outputted from the filter 6 is inputted to an analog-to-digital conversion circuit (A/D) 7 through an amplifying circuit 8 and an analog-to-digital conversion circuit 7 outputs the inputted signal after converting into a digital value on the basis of a predetermined reference signal. Thereby, the terminal device 1 demodulates I-data I which comprises demodulation result at the timing synchronized with a reference phase of the received signal.

Further, The output signal outputted from the amplifying circuit 8 is inputted to the analog-to-digital conversion circuit 7 through a phase shifter 9 and the analog-to-digital conversion circuit 7 converts the inputted signal into a digital value. Thereby, the terminal device 1 demodulates Q-data Q consisting of a demodulation result which differs in phase by 90° from the I-signal so that the terminal device 1 demodulates the I-data and the Q-data transmitted as GMSK-modulated.

An equalizer 10 corrects distortion of the I-data and Q-data to thereby output them with multipath removed. A channel decoder 12 selects a voice data from the output data of the equalizer 10 so as to output to a voice decoder 13.

Thereby, the voice decoder 13 demodulates the voice signal transmitted as converted into I-data and Q-data and then drives a speaker 14.

With the above constitution, the terminal device 1 can receive and output a voice signal transmitted from the other end of communication through a base station.

The equalizer 10 detects an FCCH on the basis of the I-data and Q-data outputted from the analog-to-digital conversion circuit 7 and outputs the detection result to a central processing unit (CPU) 15. The central processing unit 15 controls operation of equalizer 10, channel decoder 12, etc. on the basis of such detection result.

The terminal device 1 receives a predetermined information transmitted from a base station on the basis of the FCCH detection result. The terminal device 1, by switching the frequency of the local oscillating signal based on the reception result, switches the frequency to a predetermined communication channel and then receives a voice signal by receiving a predetermined time slot.

On the other hand, the transmitting system of the terminal device 1 converts a voice signal output from a microphone 16 into a voice data at a voice encoder 17 and then converts the converted voice signal into I-data and Q-data at a channel encoder 18.

Further, a digital-to-analog conversion circuit (D/A) 19 converts the I-data and Q-data into analog signals of I-component and Q-component. A mixer 20 converts the analog signals of I-component and Q-component into a transmission signal of a predetermined frequency by means of a local oscillating signal.

The terminal device 1 outputs the output signal of the mixer 20 to a power amplifier 22 through a filter 21 and transmits the output signal of the power amplifier 22 from the antenna 2 through the antenna duplexer 3.

Here, the terminal device 1 switches the transmitting and receiving timing on the basis of a predetermined timing detection result detected at the equalizer 10. Thereby the terminal device 1 selectively receives a time slot assigned to its station among transmission signals transmitted to a plural terminal devices from the base station by applying the technique of time division multiplex and transmits a voice data to the base station by means of a time slot assigned to its station.

The operation of the phase shift correction of the terminal device constructed in this manner with regard to the first embodiment of this invention will be performed as follows.

The terminal device 1 achieves frame synchronization on the basis of the FCCH, furthermore synchronizes its overall operation with the received data on the basis of a burst and then receives a desired data by receiving a time slot.

In particular, when power is turned on of the terminal device 1 or when the area to which the terminal device belongs is changed, the central processing unit 15 outputs a control command to the oscillating section 5 to receive a BCCH and then outputs a control data to the equalizer 10 to detect the FCCH.

Upon detection of timing of the FCCH, the central processing unit 15 sets a time base counter which is incorporated into the equalizer 10 on the basis of such timing so as to achieve frame synchronization of the overall operation.

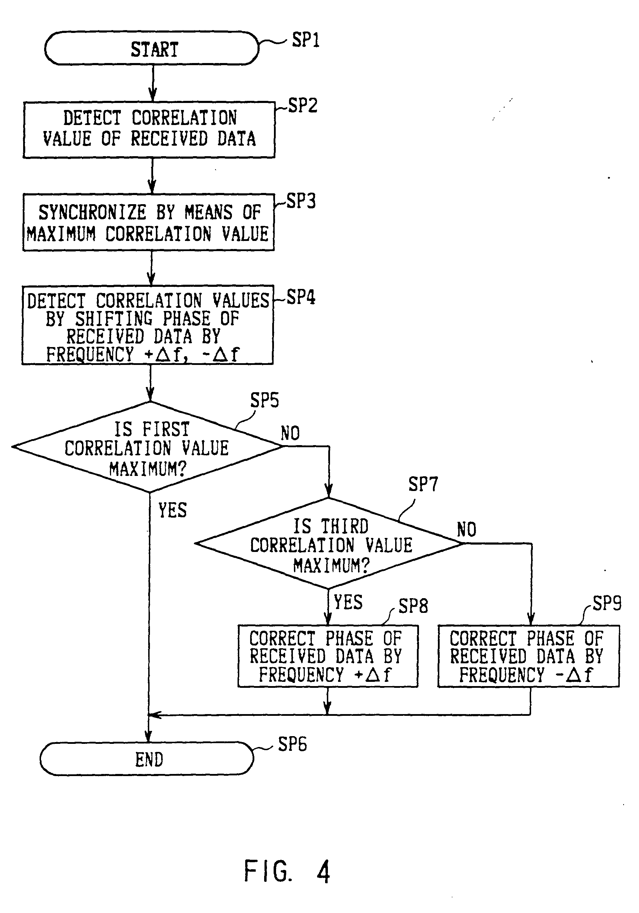

When frame synchronization is achieved in this manner on the basis of the FCCH, the terminal device 1 synchronizes with bursts and corrects phase shift by subsequently executing a processing procedure as shown in Fig. 4 with a predetermined periodicity.

In particular, upon setting of the time base counter, the central processing unit 15 subsequently proceeds from step SP1 to step SP2. Here, the central processing unit 15 outputs a control data to a phase correction circuit 24 to detect a training sequence which is put in a burst.

Here, as described above with respect to Fig. 1, the phase correction circuit 24 sequentially executes an operational processing of the following equation: 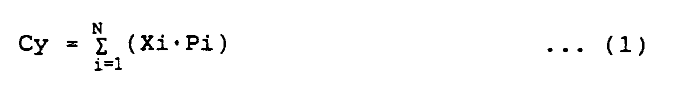 between a bit pattern for detecting a training sequence and received data sequentially input thereto so as to detect a correlation value Cy. Here, Xi indicates received data; Pi indicates data of the bit pattern for detecting a training sequence; and N indicates the bit number of the bit pattern for detecting the training sequence.

The phase correction circuit 24 detects a maximum value from the correlation value detection result sequentially obtained at a subsequent step SP3. The central processing unit 15 detects the timing of the training sequence based on this detection result and sets a counter of reference for operation on the basis of this timing detection result so as to synchronize the overall operation of the terminal device 1 with the burst.

Thereby, the terminal device 1 processes the received data Xi which is sequentially obtained at timing synchronized with this burst.

At this time, the phase correction circuit 24 outputs a maximum value of this correlation value detection results to the central processing unit 15. The central processing unit 15 stores the maximum value of this correlation values into a predetermined register as a first correlation value detection result Cy.

The central processing unit 15 subsequently proceeds to step SP4 and outputs a control data to the phase correction circuit 24 to change the frequency of the received data Xi so as to detect the second and the third correlation values Cx and Cz.

The phase correction circuit 24, in response to the control command from the central processing unit 15, executes an operation processing of the following equations: 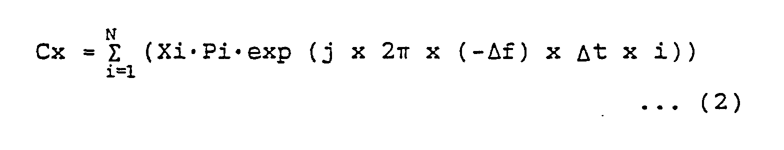 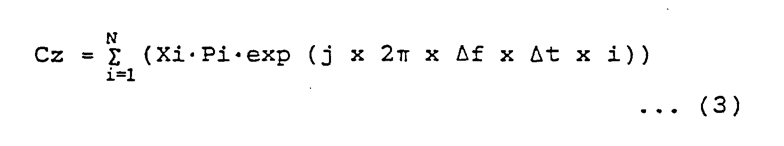 to detect correlation values Cx and Cz obtained when the received data Xi is set on a lagging phase and a leading phase, respectively, by a frequency Δf. Here, Δf indicates the frequency to be shifted; △t indicates the sample length of the received data; and "j" indicates the imaginary unit.

Thereby, the phase correction circuit 24 calculates the second and the third correlation values Cx and Cz obtained when changing the frequency of the received data by applying the technique of an operational processing, so as to detect phase shift information of the received data at respective frequencies based on result of the operational processing, this correlation value detection results being outputted to the central processing unit 15.

The central processing unit 15 at a subsequent step SP5 obtains comparison results among the first to the third correlation values Cy to Cz, to thereby determine whether or not the first correlation value Cy obtained without shifting the frequency is the maximum value among the first to the third correlation values Cy to Cz.

If an affirmative result is obtained at step SP5, the central processing unit 15 proceeds to step SP6 to terminate this processing procedure and, after elapse of a predetermined time period, repeats this processing procedure again.

More specifically, if the first correlation value Cy obtained without shifting the frequency is the largest among the first to the third correlation values Cy, Cx, Cz, it is determined as the case where a frequency shift of the received data Xi scarcely occurs.

Accordingly, in this case, the terminal device 1 is able to correctly process the received data Xi by processing the sequentially obtained received data Xi at timing as it is synchronized with the burst.

On the other hand, when the frequency of the received data Xi is shifted, the second or the third correlation value Cx or Cz rises to the maximum value correspondingly to the direction of the shift.

In this case, by correcting processing timing of the received data Xi correspondingly to the shift of the frequency, phase shift can be correspordingly corrected and deterioration in bit error rate can be reduced.

Further, instead of this correction of timing, phase shift can be readily corrected by correcting the phase shift by means of correction of the frequency of the received data Xi by applying the technique of operational processing in a similar manner as the cases of equations (2) and (3) in which the frequency of the received data Xi is shifted and multiplied by bit pattern for the training sequence detection to detect correlation values. Furthermore, by correcting phase shift by applying the technique of operational processing in this manner, phase shift can be corrected also with respect to the received data Xi provided for the second and the third correlation value detection processing Cx and Cz. Therefore, data processing result which is similar to the case where data is processed at a correct timing can be obtained in a simple construction.

The central processing unit 15 terminates the processing procedure without correcting phase shift of the received data Xi if an affirmative result is obtained at step SP5. On the contrary, if a negative result is obtained at step SP5, the central processing unit 15 proceeds to step SP7 and determines at step SP7 whether or not the third correlation value detection result Cz is the largest among the first to the third correlation values Cy to Cz.

If an affirmative result is obtained at step SP7, the central processing unit 15 proceeds to step SP8. At the step SP8, the central processing unit 15 delivers a control command to the phase correction circuit 24 to correct phase shift of the received data Xi so as to lead the phase and then proceeds to step SP6.

In response to this control command, the phase correction circuit 24 executes operational processing in which the frequency of the received data Xi is shifted by equation (3) to thereby correct phase shift of the received data Xi.

On the other hand, if a negative result is obtained at step SP7, the central processing unit 15 proceeds to step SP9. The central processing unit 15 delivers a control command to the phase correction circuit 24 at step SP9 to correct phase shift of the received data Xi so as to lag the phase, and then proceeds to step SP6.

More specifically, in response to this control command, the phase correction circuit 24 executes operational processing in which the frequency of the received data Xi is shifted by equation (2), to thereby correct phase shift of the received data Xi.

Therefore, the terminal device 1 can detect phase shift by a simple operational processing in which the second and the third correlation values Cx and Cz are detected in addition to the first correlation value Cy which is necessary for burst synchronization and their relative sizes are merely compared. The terminal device 1 can readily correct phase shift by applying the technique of the operational processing based on this detection result, whereby the received data can be processed correspondingly securely.

The following is a description of the operation of phase shift correction of the radio receiver apparatus in accordance with the second embodiment of this invention.

In this second embodiment, not only the direction of phase shift but also the amount of phase shift is detected on the basis of the second and the third correlation values which are detected by means of displacing the frequency of the received data. The phase shift of the received data is corrected based on the detection result of the direction in the phase shift and the detection result of the amount of the phase shift.

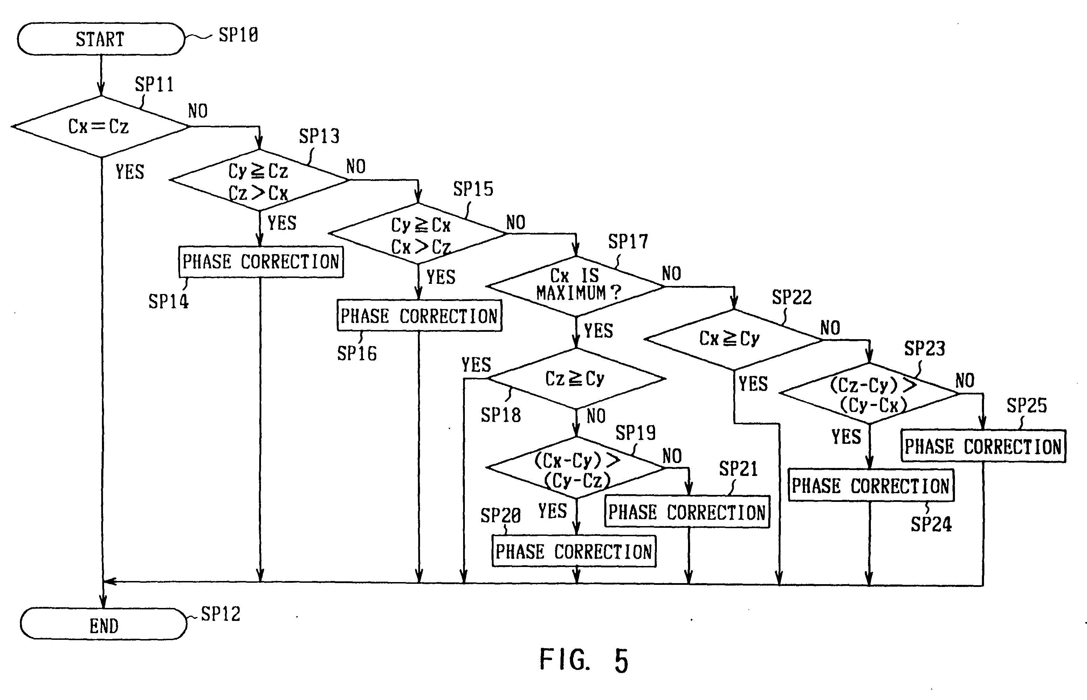

In the second embodiment, upon detection of the first to the third correlation value detection results Cy to Cz in a similar manner as in the first embodiment, the central processing unit 15 subsequently executes a processing procedure shown in Fig. 5 to thereby correct phase shift of the received data as required.

In particular, the central processing unit 15 proceeds from step SP10 to step SP11 and determines whether or not the second and the third correlation value detection results Cx and Cz are equal to each other.

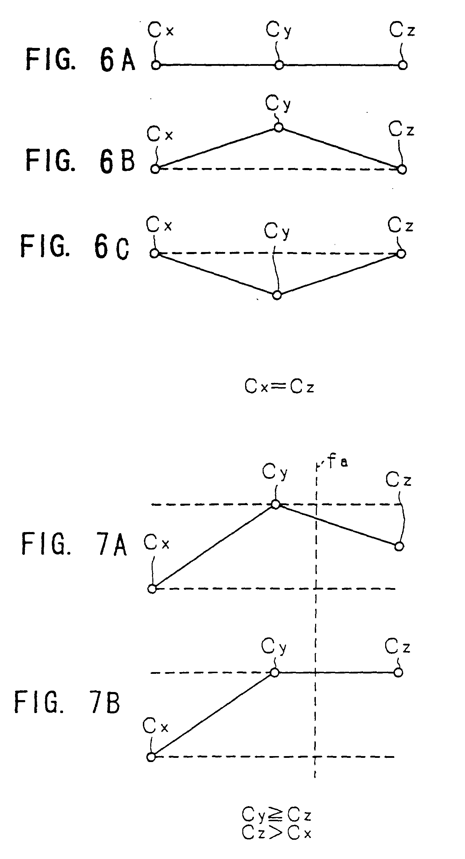

If an affirmative result is obtained at step SP11, as shown in Figs. 6A to 6C, this case corresponds to one of: the case of a first state where the first to the third correlation value detection results Cy to Cz are equal to each other as shown in Fig. 6A; the case of a second state where the first correlation value detection result Cy is larger than the second and the third correlation value detection results Cx and Cz as shown in Fig. 6B; and the case of a third state where the first correlation value detection result Cy is smaller than the second and the third correlation value detection results Cx and Cz as shown in Fig. 6C. The first and the second states can be determined as the case where phase shift of the received data scarcely occurs.

Further, the case of the third state can be considered as the case where an error has occurred in the correlation value detection results, whereby this shows that there is a possibility of erroneous correction if phase of the received data is accordingly corrected.

In this way, when an affirmative result is obtained at step SP11, the central processing unit 15 proceeds to step SP12 where this processing procedure is terminated without correcting phase shift of the received data.

On the other hand, when a negative result is obtained at step SP11, the central processing unit 15 proceeds to step SP13 where it determines whether the relation of the following equation:$\text{Cy ≧ Cz} \text{Cz > Cx}$ holds or not.

Here, if an affirmative result is obtained, as shown in Figs. 7A and 7B, this case corresponds to one of: the case where the second correlation value detection result Cx is the smallest and the first and the third correlation value detection results Cy and Cz are equal to each other: the case where the first correlation value detection result Cy is larger than the third correlation value detection result Cz. In the case shown in Figs. 7A and 7B, it is considered that a frequency "fa" by which phase shift can be corrected to the minimum exists between the first and the third correlation value detection results Cy and Cz.

If an affirmative result is obtained at step SP13, the central processing unit 15 proceeds to step SP14 and executes operational processing of the following equation: 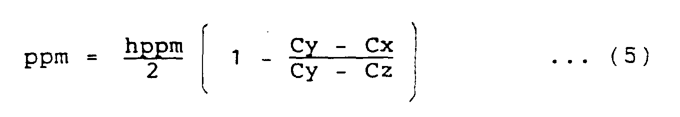 to detect a phase shift correction amount "ppm". Here, "hppm" indicates the limitation value of phase shift correction and, in the case of this embodiment, the frequency Δf shifted in the second and the third correlation value detection processing is to be assigned.

Therefore, the central processing unit 15 detects phase shift direction and phase shift correction amount and delivers a control command to the phase correction circuit 24 based on such detection result to correct phase shift, and then proceeds to step SP12 to terminate the processing procedure.

On the other hand, if a negative result is obtained at step SP13, the central processing unit 15 proceeds to step SP15 where it determines whether the relation of the following equation:$\text{Cy ≧ Cx} \text{Cx > Cz}$ holds or not.

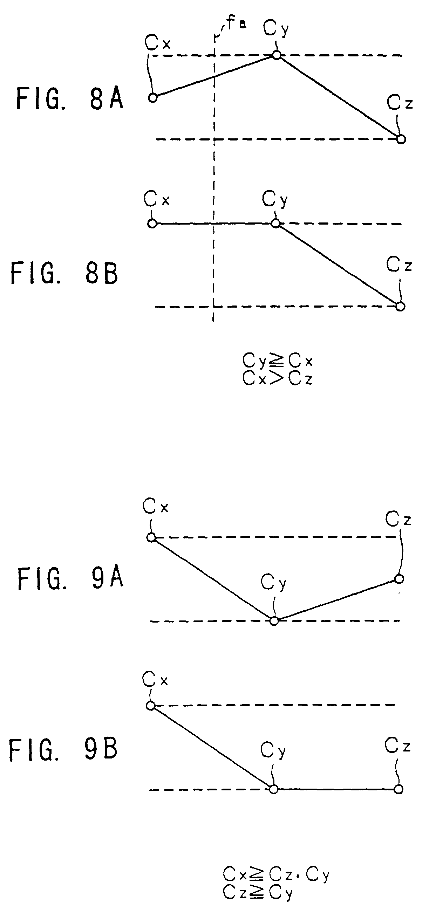

Here, if an affirmative result is obtained, as shown in Figs. 8A and 8B, this is considered as the case opposite to the case of Figs. 6A and 6B that a frequency "fa" by which phase shift can be corrected to the minimum exists between the first and the second correlation value detection results Cy and Cx. The central processing unit 15 proceeds to step SP16 and executes operational processing of the following equation: 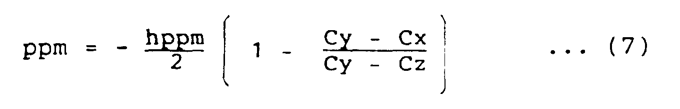 to detect phase shift correction amount "ppm".

Thereby, the central processing unit 15 detects phase shift direction and phase shift correction amount "ppm" and, based on this detection result, delivers a control command to the phase correction circuit 24 to correct phase shift, and then proceeds to step SP12 to terminate the processing procedure.

On the other hand, if a negative result is obtained at step SP15, the central processing unit 15 proceeds to step SP17 to determine whether or not the second correlation value detection result Cx is the largest value among the three correlation value detection results and, if an affirmative result is obtained, proceeds to step SP18 to determine whether or not the relation of the following equation holds:$\text{Cz ≧ Cy}$

If an affirmative result is obtained at the step SP18, as shown in Figs. 9A and 9B, this corresponds to one of case: the case where the second correlation value detection result Cx is the largest: the case where the first and the third correlation value detection results Cy and Cz are equal each other: the case where values thereof becomes smaller in the order of the third correlation value detection result Cz to the first correlation value detection result Cy. These case are considered as such cases as where an error has occurred in the correlation value detection result and show that there is a possibility of erroneous correction if phase of the received data is corrected.

Thus, if an affirmative result is obtained at step SP18, the central processing unit 15 proceeds to step SP12 to terminate this processing procedure without correcting phase of the received data.

On the other hand, when a negative result is obtained at step SP18, the central processing unit 15 proceeds to step SP19 to determine whether or not the relation of the following equation holds:$\text{(Cx - Cy) > (Cy - Cz)}$

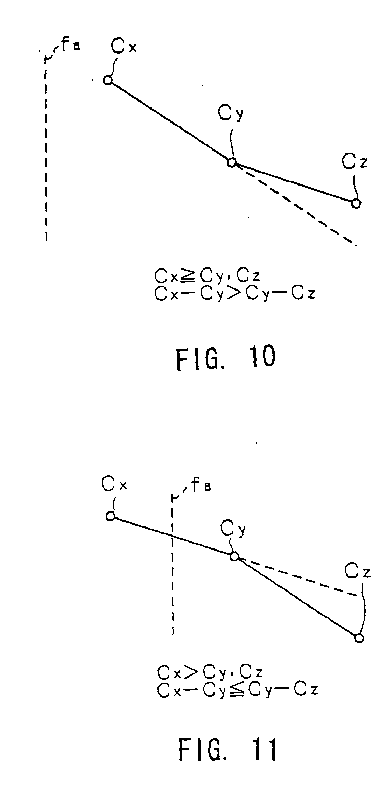

If an affirmative result is obtained at step SP19, as shown in Fig. 10, this case corresponds to the case where the values becomes smaller in the order of the second correlation value detection result Cx, the first correlation value detection result Cy and the third correlation value detection result Cz, and the increase in the correlation value becomes larger from the first correlation value detection result Cy to the second correlation value detection result Cx. This case is considered as the case where a frequency "fa" which is capable of correcting the phase shift to the minimum exists outside of the second correlation value detection result Cx.

If an affirmative result is obtained at step SP19, the central processing unit 15 proceeds to step SP20 to correct phase shift of the received data toward the second correlation value detection result Cx and proceeds to step SP12.

At this time, the central processing unit 15 corrects phase shift of the received data so that the frequency is lowered correspondingly by the limit value "hppm" of the phase shift correction to execute correction of a phase shift within a certain range.

More specifically, since it is possible that an error occurs in the correlation value detection results Cx to Cy, the terminal device 1 is thereby adapted to be capable of effectively avoiding a large reduction in bit error rate by correcting phase shift within a certain range even when the correlation value detection results Cx to Cy are erroneously detected.

On the other hand, if a negative result is obtained at step SP19, the central processing unit 15 proceeds to step SP21.

As shown in Fig. 11, this case corresponds to the case where the value becomes smaller in the order of the second correlation value detection result Cx, the first correlation value detection result Cy and the third correlation value detection result Cz, and the decrease in the correlation value is larger from the first correlation value detection result Cy to the third correlation value detection result Cz. This case is considered as the case where a frequency "fa" which is capable of correcting phase shift to the minimum exists in the vicinity of the second correlation value detection result Cx.

Thus, at the step SP21, the central processing unit 15 executes operational processing of the following equation: 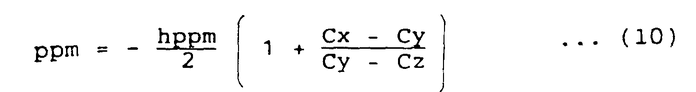 to detect phase shift correction amount "ppm" and delivers a control command to the phase correction circuit 24 to correct phase shift, and then proceeds to step SP12 to terminate the processing procedure.

On the other hand, if a negative result is obtained at step SP17, the central processing unit 15 proceeds to step SP22 and determines whether relation of the following equation holds.$\text{Cx ≧ Cy}$

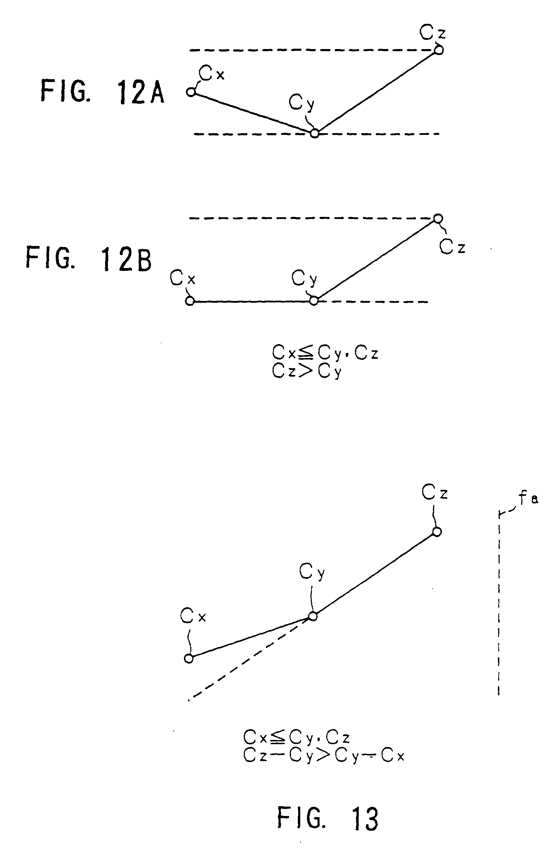

If an affirmative result is obtained at step SP22, as shown in Figs. 12A and 12B, this corresponds to the case where the second and the third correlation value detection results Cx and Cz of Figs. 9A and 9B are replaced each other. In result, the central processing unit 15 directly proceeds to step SP12 in a similar manner as the case of step SP18 to terminate this processing procedure without correcting phase shift of the received data.

On the other hand, if a negative result is obtained at step SP22, the central processing unit 15 proceeds to step SP23 to determine whether or not the relation of the following equation holds.$\text{(Cz - Cy) > (Cy - Cx)}$

If an affirmative result is obtained at step SP23, as shown in Fig. 13, this case corresponds to the case where the second and the third correlation value detection results Cx and Cz of Fig. 10 are replaced each other. This case is considered as the case where a frequency "fa" capable of correcting phase shift to the minimum exists outside of the third correlation value detection result Cz.

Thus, at step SP24, the central processing unit 15 corrects phase shift of the received data in a manner opposite to the case of step SP20 so that the frequency is higher correspondingly by the limit value "hppm" of the phase shift correction. Thereby phase shift is corrected within a certain range and then the central processing unit 15 proceeds to step SP12.

On the other hand, if a negative result is obtained at step SP23, the central processing unit 15 proceeds to step SP25.

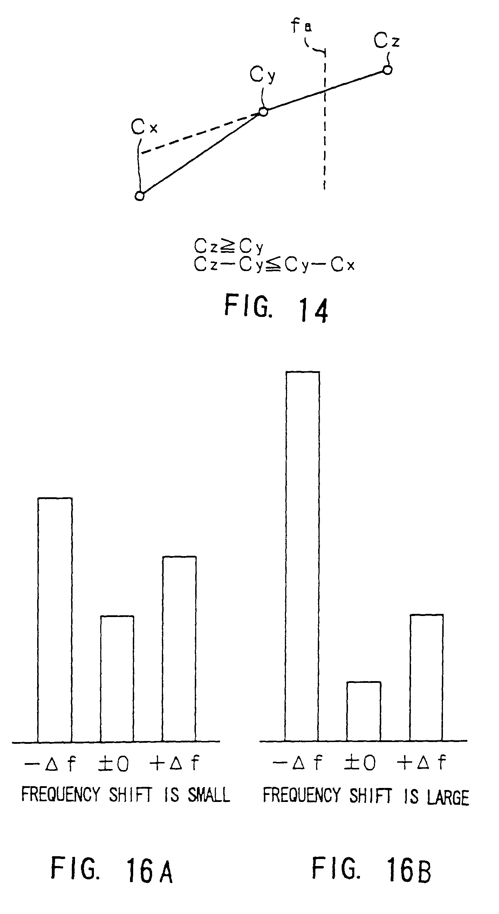

As shown in Fig. 14, this case corresponds to the case where the second and the third correlation value detection results Cx and Cz of Fig. 11 are replaced each other. This case is considered as the case where a frequency "fa" which is capable of correcting phase shift to the minimum exists in the vicinity of the third correlation value detection results Cz.

Thus, the central processing unit 15 at step SP25 executes operational processing shown in following equation: 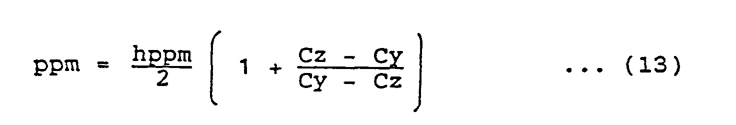 to detect a phase shift correction amount "ppm" and delivers a control command to the phase correction circuit 24 to correct the phase shift, and then proceeds to step SP12 to terminate the processing procedure.

Thus, in accordance with the construction shown in Fig. 5, in the second embodiment, a similar advantage as the first embodiment can be obtained. Furthermore in the second embodiment, by detecting the phase shift amount in addition to the phase shift direction based on the comparison result of correlation value detection results, phase shift can be corrected even more readily and securely. Moreover in the second embodiment, by performing a phase correction within a range having certain limit values, it is possible to previously prevent an excessive correction of phase shift so that phase shift can be corrected correspondingly easily and securely to improve the bit error rate.

In the case where phase shift of the received data is corrected on the basis of the correlation value detection results which are obtained from one burst, there is a possibility that direction of the phase shift is erroneously detected due to the influence of a noise etc..

Accordingly, although a method may be considered of averaging the correlation value detection results among plural bursts to correct the phase shift on the basis of this averaged correlation value detection result, in this case, there is a problem that procedure of the floating-point arithmetic etc. becomes intricate.

The following is the description of the operation of phase shift correction of the radio receiver apparatus in accordance with the third embodiment of the present invention in view of these problems.

In the third embodiment, detection result of the phase shift direction is accumulated to obtain frequency of the detection and phase shift is corrected on the basis of the frequency of detection.

More specifically, as shown in Fig. 15, the central processing unit 15 in the third embodiment obtains comparison results among the first to the third correlation value detection results Cy to Cz to thereby detect a maximum value.

Further, the central processing unit 15 accumulate for a predetermined time period the maximum value detection results to thereby detect a correlation value detection result which has the highest rate of frequency of rising to the maximum value.

More specifically, as shown in Figs. 16A and 16B, the case where the first correlation value detection result Cy is the maximum value is indicated by ±0 and the cases where the second and third correlation value detection results Cx and Cz are the maximum value are indicated by -Δf and +△f, respectively, where, while there is no difference in the rate of recurrence of detection in any of the maximum value detection results -△f, ±0, +Δf when phase shift in the received data is small (Fig. 16A), the rate of recurrence of the maximum value detection becomes larger toward a phase shift when such phase shift is large.

Thus, phase shift can be detected on the basis of the frequency of the maximum value detection and furthermore, by accumulating detection results at that time, the influence of a noise, etc., also can be effectively avoided.

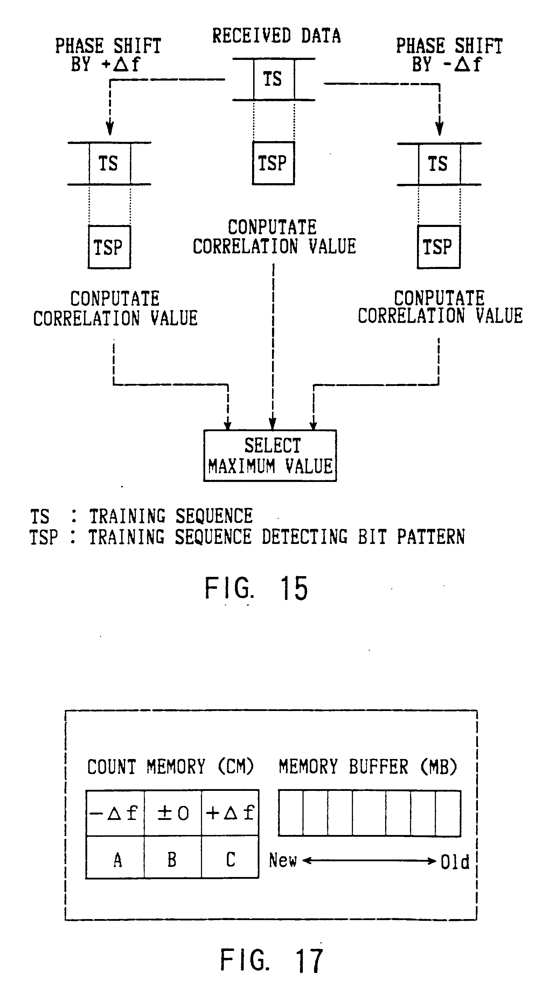

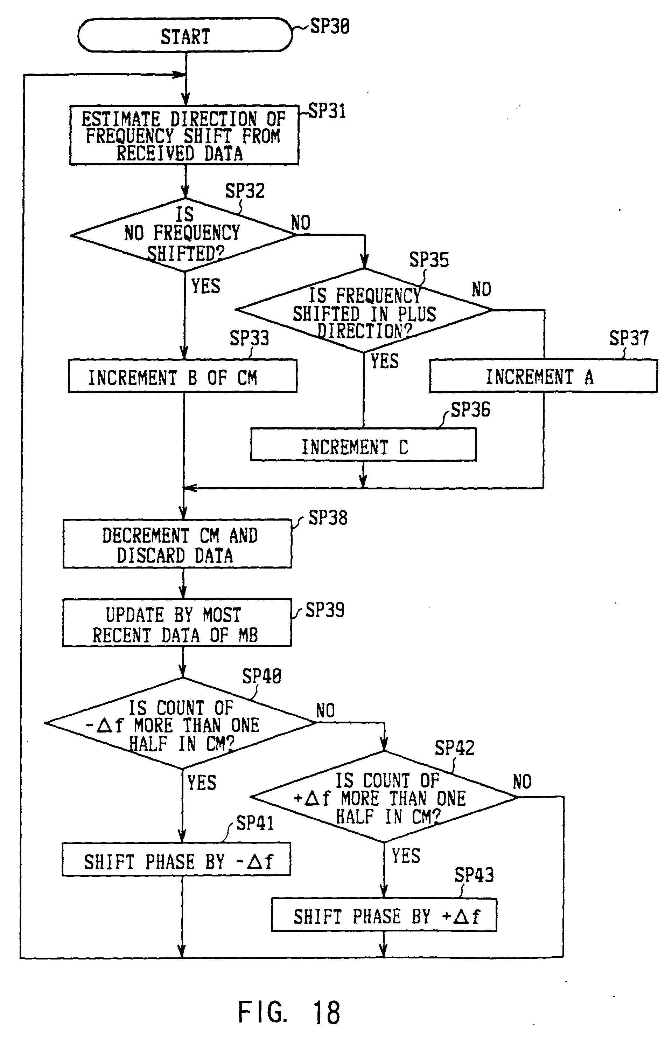

In accordance with this detection principle, the central processing unit 15 in the third embodiment repeats processing procedure shown in Fig. 18 using a counter memory CM and a memory buffer MB shown in Fig. 17 to detect a phase shift.

More specifically, the central processing unit 15 proceeds from step SP30 to step SP31 and detects the maximum value among the first to the third correlation value detection results Cy to Cz to thereby determine temporarily a correlation value detection result for which the maximum value is obtained as the direction of phase shift of the received data.

Subsequently, the central processing unit 15 proceeds to step SP32 to determine whether the received data is without a phase shift or not and, when the first correlation value detection result Cy is the maximum value, proceeds to step SP33 since an affirmative result is obtained.

The central processing unit 15 increments a first memory area B of the counter memory CM by value "1" and then proceeds to step SP38.

On the other hand, if a negative result is obtained at step SP32, the central processing unit 15 proceeds to step SP35 to determine whether phase shift of the received data is of the direction along which frequency is increased.

Since an affirmative result is obtained at step SP35 when the third correlation value detection result Cz is the maximum value, the central processing unit 15 proceeds to step SP36. At step SP36, the central processing unit 15 increments a memory area C of the counter memory CM by value "1" and then proceeds to step SP38.

On the other hand, if a negative result is obtained at step SP35, since this is the case where the third correlation value detection result Cz is the maximum value and the phase shift of the received data is the direction of the frequency decrease, the central processing unit 15 proceeds to step SP37. The central processing unit 15 increments a memory area A of the counter memory CM by value "1" at the step SP37 and then proceeds to step SP38.

Thereby, the terminal device 1 temporarily determines the direction of phase shifts from the first, the second and the third correlation value detection results Cy, Cx and Cz and stores the determined result into the counter memory CM. Accordingly, twenty of the latest maximum value detection results are stored in the counter memory CM, in respective areas A, B and C for maximum value detection results -Δf, ±0, +Δf.

Subsequently, the central processing unit 15 at step SP38 determines whether or not twenty of the maximum value detection results are already accumulated in the memory buffer MB and, when twenty detection results are already stored at step SP38, reads out the oldest maximum value detection result from the memory buffer MB. Simultaneously, the central processing unit 15 decrements by value "1" one of the first to third memory areas A to C of counter memory CM which corresponds to the maximum value detection result, for example, to + Δf if read-out maximum value detection result is + Δf.

The central processing unit 15 retains twenty latest maximum value detection results in the memory buffer MB in order of detection from the older to the newer. Correspondingly, twenty maximum value detection results are accumulated in the counter memory CM on each of the first to the third correlation value detection results, in order that twenty maximum value detection results are stored in each memory area.

Further, at this time, by performing decrement the content of the counter memory CM from the memory area corresponding to the oldest maximum value detection result read out from the memory buffer MB, the latest maximum value detection result is stored at all times.

Thereby, the central processing unit 15 can detect frequency of detecting the maximum value for each of the first to the third correlation value detection results based on the content of the counter memory CM.

Thus, it is possible to correct phase shift in accordance with this frequency of occurrence to correct the phase shift with effectively avoiding the influence of a noise.

More specifically, the central processing unit 15, at a subsequent step SP39, stores the maximum value detection result detected at step SP31 into the memory buffer MB instead of the oldest maximum value detection result which is read out, and at a subsequent step SP40, determines whether or not value in the second memory area "A" corresponding to the second correlation value detection result is the value "10" or more. At this time, if the maximum value detection result stored newly in the memory buffer MB is -Δf for instance, memory area "A" of counter memory CM corresponding to the maximum value detection result -Δf is performed increment only by one.

If an affirmative result is obtained at step SP40, the central processing unit 15 determines that phase shift of the received data is of the direction along which the frequency decreases, and the phase of the received data is corrected to the direction along which frequency thereof decreases at a subsequent step SP41 and then the central processing unit 15 returns to step SP31.

On the other hand, if a negative result is obtained at step SP40, the central processing unit 15 proceeds to step SP42 and determines whether or not the value in the memory area "C" corresponding to the third correlation value detection result is the value of ten or more at step SP 42.

If an affirmative result is obtained at step SP42, the central processing unit 15 determines that phase shift of the received data is of the direction along which the frequency increases, and after correcting the phase of the received data at a subsequent step SP43 to the direction along which frequency thereof is increased, returns to step SP31.

On the other hand, if a negative result is obtained at step SP42, since this is considered as the case where phase shift scarcely occurs, the central processing unit 15 directly returns to step SP31 to thereby quit phase shift correcting processing of the received data.

In accordance with the operation shown in Fig. 18, phase shift direction is temporarily determined from a correlation detection result and phase shift is corrected by means of detecting frequency of occurrence of the phase shift direction, so that, in addition to the advantages of the first embodiment, a phase shift securely can be corrected with effectively avoiding the influence of a noise, etc..

The above embodiments are described with respect to the case where the states of shifting phase of the received data are generated by executing operational processing of equations (2) and (3) to perform multiplication processing with a bit pattern for training sequence detection whereby correlation values are detected to detect phase shift information.

Further, in the above third embodiment is described with respect to the case where the maximum value detection result is stored into the memory buffer. However, this invention is not only limited to this, but a ring buffer which is formed so that a pointer is shifted may be used instead of the memory buffer.

Furthermore, the above third embodiment is described with respect to the case where merely direction of phase shift is detected on the basis of frequency of the maximum value detection results. However, this invention is not only limited to this, but amount of the phase shift may be detected.

More specifically, since the extent of the phase shift can be determined in accordance with distribution of the detection result as described above with respect to Figs. 16A and 16B, operational processing of the following equation:$\text{Δfcorrect = Δfmax x {1- (Xmax - X(Δf))/Xrange}}$ may be executed to detect a frequency correcting amount Δfcorrect.

In this equation, Δfmax indicates the maximum value of the correcting frequency; Xmax indicates the maximum value of frequency of occurrence, X(△f) indicates frequency of occurrence at the time of a frequency Δf, and Xrange indicates the range of variation at the time of X(Δf).

Furthermore, the above embodiments are described with respect to the case where this invention is applied to a digital cellular system to correct a phase shift by using a training sequence. However, this invention is not only limited to this, but may be widely applied to those other cases where various data is received by detecting a reference pattern of a previously set bit pattern for applying various radio receiver apparatus.

## Claims

1. A radio receiver apparatus for receiving a transmission signal in which a reference pattern occurs at a predetermined timing, the apparatus comprising:
receiving means (2-9) for receiving and demodulating said transmission signal to output a received data signal;
phase shift information detection means (15, 24) for detecting first phase shift information between said received data signal and said reference pattern; and
received data processing means (10-14) for processing said received data signal with reference to said first phase shift information so as to synchronise said receiver apparatus to said reference pattern; **characterised in that**:
said phase shift information detection means (15, 24) is further operative, after having detected said first phase shift information, to delay and advance said received data signal in phase and to detect second phase shift information between said reference pattern and said received data signal having been delayed and advanced in phase; and by
phase shift correction means (24) for correcting first phase shift information supplied to said received data processing means (10-14) on the basis of a comparison between said first and second phase shift information.

2. A radio receiver apparatus according to claim 1, wherein:
said phase shift information detection means detects the phase shift direction and amount of said received data, based on said first phase shift information and said second phase shift information; and
said phase shift correcting means corrects the phase shift of said received data based on said shift direction and amount.

3. A radio receiver apparatus according to claim 1, wherein:
said phase shift information detection means comprises means for detecting the phase shift direction of said received data, based on said first phase shift information and second phase shift information; and wherein
said phase shift correcting means corrects the phase shift of said received data based on accumulated results of the phase shift direction detection.

4. The radio receiver apparatus according to claim 1, 2 or 3, wherein:
said receiving means (2-9) comprises a demodulating section (7, 9) for demodulating I-data and Q-data of the received signal and a synchronization signal detecting section for detecting the synchronization signal and further comprising control means for synchronizing and controlling the whole apparatus based on the synchronization signal output from said synchronization signal detecting part.

5. A method of phase correction, for use in a radio receiver apparatus for receiving a transmission signal in which a reference pattern occurs at a predetermined timing; the method comprising the steps of:
receiving and demodulating said transmission signal into a received data signal;
detecting first phase shift information between said received data signal and said reference pattern;
processing said received data signal on the basis of said first phase shift information; **characterised by**:
after said step of detecting first shift information, detecting a second phase shift information between said reference pattern and said received data; and
correcting the phase of said received data signal on the basis of said first and second phase shift information.

6. A method according to claim 5, wherein: said first phase shift information comprises a first correlation value and said second phase shift information comprises second and third correlation values; and
said step of correcting comprises determining the largest value among said first to third correlation values and correcting the phase of said received data signal on the basis of said determined largest value.

7. A method for phase correction according to claim 6, wherein
in the case where said first correlation value is the largest value among said first, second and third correlation values, phase correction for correcting the phase shift of the frequency of said received data is not performed.

8. A method for phase correction according to claim 6 or 7, wherein
in the case where said third correlation value is the largest value among said first, second, and third correlation values, the frequency of said received data is corrected in order to advance the phase.

9. A method for phase correction according to claim 6, 7 or 8, wherein
in the case where said second correlation value among said first, second, and third correlation values is largest, the frequency of said received data is corrected in order to delay the phase.

10. A method for phase correction according to claim 6, where said step of correcting comprises:
for a predetermined period accumulating data on which of said first, second and third correlation values is largest;
detecting the correlation which has been largest most often on the basis of the accumulated result; and
determining the phase shift information on the basis of the maximum correlation value obtained by detection, and correcting the phase shift of frequency of said received data based on the detected phase shift information.

11. A method for phase correction according to claim 10, in which the obtained maximum correlation value among said first, second, and third correlation values is determined as the temporary phase shift direction of the received data.

12. A method for phase correction according to claim 10 and 11 wherein when said maximum correlation value obtained by detection is said second or third correlation value, the phase of frequency of said received data is delayed if said second correlation value is largest, and the phase is advanced if said third correlation value is largest.

## Patentansprüche

1. Funkempfängergerät zum Empfang eines Sendesignals, bei dem ein Referenzmuster mit einem vorbestimmten Zeitablauf vorkommt, mit:
einer Empfängereinrichtung (2 - 9) zum Empfang und zur Demodulation des Sendesignals zur Ausgabe eines empfangenen Datensignals,
einer Phasenverschiebungsinformations-Detektoreinrichtung (15, 24) zum Detektieren einer ersten Phasenverschiebungsinformation zwischen dem empfangenen Datensignal und dem Referenzmuster, und
einer Empfangsdaten-Verarbeitungseinrichtung (10 - 14) zur Verarbeitung des empfangenen Datensignals in Bezug auf die erste Phasenverschiebungsinformation, um das Empfängergerät mit dem Bezugsmuster zu synchronisieren, **dadurch gekennzeichnet, dass**
die Phasenverschiebungsinformations-Detektoreinrichtung (15, 24) nach dem Detektieren der ersten Phasenverschiebungsinformation das empfangene Datensignal in der Phase verzögert und vorschiebt und eine zweite Phasenverschiebungsinformation zwischen dem Referenzmuster und dem in der Phase verzögerten und vorgeschobenen empfangenen Datensignal detektiert, und **gekennzeichnet durch**
eine Phasenverschiebungs-Korrektureinrichtung (24) zur Korrektur der Empfangsdaten-Verarbeitungseinrichtung (10 - 14) zugeführten ersten Phasenverschiebungsinformation auf der Basis eines Vergleichs zwischen der ersten und zweiten Phasenverschiebungsinformation.

2. Funkempfängergerät nach Anspruch 1, wobei
die Phasenverschiebungsinformations-Detektoreinrichtung die Phasenverschiebungsrichtung und den Phasenverschiebungsbetrag der empfangenen Daten auf der Basis der ersten Phasenverschiebungsinformation und der zweiten Phasenverschiebungsinformation detektiert, und
die Phasenverschiebungs-Korrektureinrichtung die Phasenverschiebung der empfangenen Daten auf der Basis der Verschiebungsrichtung und des Verschiebungsbetrag korrigiert.

3. Funkempfängergerät nach Anspruch 1, wobei
die Phasenverschiebungsinformations-Detektoreinrichtung eine Einrichtung zum Detektieren der die Phasenverschiebungsrichtung der empfangenen Daten auf der Basis der ersten Phasenverschiebungsinformation und der zweiten Phasenverschiebungsinformation aufweist, und wobei
die Phasenverschiebungs-Korrektureinrichtung die Phasenverschiebung der empfangenen Daten auf der Basis akkumulierter Ergebnisse der Phasenverschiebungsrichtungsdetektion korrigiert.

4. Funkempfängergerät nach Anspruch 1, 2 oder 3, wobei
die Empfängereinrichtung (2 - 9) einen Demodulationsabschnitt (7, 9) zum Demodulieren von I-Daten und Q-Daten des empfangenen Signals und einen Synchronisationssignaldetektorabschnitt zum Detektieren des Synchronisationssignals und außerdem eine Steuerungseinrichtung zur Synchronisation und Steuerung des ganzen Geräts auf der Basis des vom Synchronisationssignaldetektorteil ausgegebenen Synchronisationssignals aufweist.

5. Phasenkorrekturverfahren zur Verwendung bei einem Funkempfängergerät zum Empfang eines Sendesignals, bei welchem ein Referenzmuster mit einem vorbestimmten Zeitablauf vorkommt, wobei das Verfahren die Schritte aufweist:
Empfangen und Demodulieren des Sendesignals in ein empfangenes Datensignal,
Detektieren einer ersten Phasenverschiebungsinformation zwischen dem empfangenen Datensignal und dem Referenzmuster,
Verarbeiten des empfangenen Datensignals auf der Basis der ersten Phasenverschiebungsinformation, **gekennzeichnet durch**
Detektieren einer zweiten Phasenverschiebungsinformation zwischen dem Referenzmuster und den empfangenen Daten nach dem Schritt des Detektierens der ersten Phasenverschiebungsinformation, und
Korrigieren der Phase des empfangenen Datensignals auf der Basis der ersten und zweiten Phasenverschiebungsinformation.

6. Verfahren nach Anspruch 5, wobei die erste Phasenverschiebungsinformation einen ersten Korrelationswert aufweist und die zweite Phasenverschiebungsinformation einen zweiten und dritten Korrelationswert aufweist, und wobei
der Korrekturschritt die Bestimmung des größten Wertes unter dem ersten, zweiten und dritten Korrelationswert sowie die Korrektur der Phase des empfangenen Datensignals auf der Basis des bestimmten größten Wertes aufweist.

7. Phasenkorrekturverfahren nach Anspruch 6, wobei
in dem Fall, dass der erste Korrelationswert der größte Wert unter dem ersten, zweiten und dritten Korrelationswert ist, die Phasenkorrektur zur Korrektur der Phasenverschiebung der Frequenz der empfangenen Daten nicht ausgeführt wird.

8. Phasenkorrekturverfahren nach Anspruch 6 oder 7, wobei
in dem Fall, dass der dritte Korrelationswert der größte Wert unter dem ersten, zweiten und dritten Korrelationswert ist, die Frequenz der empfangenen Daten korrigiert wird, um die Phase vorzuschieben.

9. Phasenkorrekturverfahren nach Anspruch 6, 7 oder 8, wobei
in dem Fall, dass der zweite Korrelationswert der Größte unter dem ersten, zweiten und dritten Korrelationswert ist, die Frequenz der empfangenen Daten korrigiert wird, um die Phase zu verzögern.

10. Phasenkorrekturverfahren nach Anspruch 6, wobei der Korrekturschritt aufweist:
Akkumulieren von Daten darüber, welcher vom ersten, zweiten und dritten Korrelationswert der Größte ist, für eine vorbestimmten Periode,
Detektieren der Korrelation, die am häufigsten die Größte gewesen ist auf der Basis des Akkumulationsergebnisses, und
Bestimmen der Phasenverschiebungsinformation auf der Basis des durch die Detektion erhaltenen maximalen Korrelationswertes und Korrigieren der Phasenverschiebung der Frequenz der empfangenen Daten auf der Basis der detektierten Phasenverschiebungsinformation.

11. Phasenkorrekturverfahren nach Anspruch 10, wobei der erhaltene maximale Korrelationswert unter dem ersten, zweiten und dritten Korrelationswert als die temporäre Phasenverschieberichtung der empfangenen Daten bestimmt wird.

12. Phasenkorrekturverfahren nach Anspruch 10 und 11, wobei in dem Fall, dass der durch die Detektion erhaltene maximale Korrelationswert der zweite oder dritte Korrelationswert ist, die Phase der Frequenz der empfangenen Daten verzögert wird, wenn der zweite Korrelationswert der Größte ist, und die Phase vorgeschoben wird, wenn der dritte Korrelationswert der Größte ist.

## Revendications

1. Appareil de récepteur radio pour recevoir un signal d'émission dans lequel un motif de référence survient selon un cadencement prédéterminé, l'appareil comprenant :
un moyen de réception (1-9) pour recevoir et pour démoduler ledit signal d'émission afin d'émettre en sortie un signal de données reçues ;
un moyen de détection d'information de décalage de phase ou déphasage (15, 24) pour détecter une première information de décalage de phase ou déphasage entre ledit signal de données reçues et ledit motif de référence ; et
un moyen de traitement de données reçues (10-14) pour traiter ledit signal de données reçues par référence à ladite première information de décalage de phase ou déphasage de manière à synchroniser ledit appareil de récepteur sur ledit motif de référence,
**caractérisé en ce que** :
ledit moyen de détection d'information de décalage de phase ou déphasage (15, 24) fonctionne en outre pour, après avoir détecté ladite première information de décalage de phase ou déphasage, retarder et avancer ledit signal de données reçues en phase et pour détecter une seconde information de décalage de phase ou déphasage entre ledit motif de référence et ledit signal de données reçues qui a été retardé et avancé en phase ; et
un moyen de correction de décalage de phase ou déphasage (24) pour corriger une première information de décalage de phase ou déphasage appliquée sur ledit moyen de traitement de données reçues (10-14) sur la base d'une comparaison entre ladite première information de décalage de phase ou déphasage et ladite seconde information de décalage de phase ou déphasage.

2. Appareil de récepteur radio selon la revendication 1, dans lequel :
ledit moyen de détection d'information de décalage de phase ou déphasage détecte la direction de décalage de phase ou déphasage et la valeur de décalage desdites données reçues sur la base de ladite première information de décalage de phase ou déphasage et de ladite seconde information de décalage de phase ou déphasage ; et
ledit moyen de correction de décalage de phase ou déphasage corrige le décalage de phase ou déphasage desdites données reçues sur la base de ladite direction de décalage et de ladite valeur de décalage.

3. Appareil de récepteur radio selon la revendication 1, dans lequel :
ledit moyen de détection d'information de décalage de phase ou déphasage comprend un moyen pour détecter la direction de décalage de phase ou déphasage desdites données reçues, sur la base de ladite première information de décalage de phase ou déphasage et de ladite seconde information de décalage de phase ou déphasage ; et dans lequel
ledit moyen de correction de décalage de phase ou déphasage corrige le décalage de phase ou déphasage desdites données reçues sur la base de résultats accumulés de la détection de direction de décalage de phase ou déphasage.

4. Appareil de récepteur radio selon la revendication 1, 2 ou 3, dans lequel ledit moyen de réception (2-9) comprend une section de démodulation (7,9) pour démoduler des données I et des données Q du signal reçu et une section de détection de signal de synchronisation pour détecter le signal de synchronisation et comprend en outre un moyen de commande pour synchroniser et commander l'appareil pris dans sa globalité sur la base du signal de synchronisation qui émis en sortie depuis ladite partie de détection de signal de synchronisation.

5. Procédé de correction de phase, destiné à être utilisé dans un appareil de récepteur radio pour recevoir un signal d'émission dans lequel un motif de référence survient à un cadencement prédéterminé, le procédé comprenant les étapes de :
réception et démodulation dudit signal d'émission selon un signal de données reçues ;
détection d'une première information de décalage de phase ou déphasage entre ledit signal de données reçues et ledit motif de référence ;
traitement dudit signal de données reçues sur la base de ladite première information de décalage de phase ou déphasage,
**caractérisé par** :
après ladite étape de détection d'une première information de décalage, détection d'une seconde information de décalage de phase ou déphasage entre ledit motif de référence et lesdites données reçues ; et
correction de la phase dudit signal de données reçues sur la base de ladite première information de décalage de phase ou déphasage et de ladite seconde information de décalage de phase ou déphasage.

6. Procédé selon la revendication 5, dans lequel :
ladite première information de décalage de phase ou déphasage comprend une première valeur de corrélation et ladite seconde information de décalage de phase ou déphasage comprend des seconde et troisième valeurs de corrélation ; et
ladite étape de correction comprend la détermination de la valeur la plus importante parmi lesdites première à troisième valeurs de corrélation et la correction de la phase dudit signal de données reçues sur la base de ladite valeur la plus importante déterminée.

7. Procédé pour une correction de phase selon la revendication 6, dans lequel :
dans le cas où ladite première valeur de corrélation est la valeur la plus grande parmi lesdites première, seconde et troisième valeurs de corrélation, une correction de phase pour corriger le décalage de phase ou déphasage de la fréquence desdites données reçues n'est pas réalisée.

8. Procédé pour une correction de phase selon la revendication 6 ou 7, dans lequel, dans le cas où ladite troisième valeur de corrélation prise parmi lesdites première, seconde et troisième valeurs de corrélation est la plus importante, la fréquence desdites données reçues est corrigée afin d'avancer la phase.

9. Procédé pour une correction de phase selon la revendication 6, 7 ou 8, dans lequel :
dans le cas où ladite seconde valeur de corrélation prise parmi lesdites première, seconde et troisième valeurs de corrélation est la plus importante, la fréquence desdites données reçues est corrigée afin de retarder la phase.

10. Procédé pour une correction de phase selon la revendication 6, dans lequel ladite étape de correction comprend :
pendant une période prédéterminée, accumulation de données concernant la détermination de celle desdites première, seconde et troisième valeurs de corrélation qui est la plus importante ;
détection de la corrélation qui a été la plus importante le plus souvent sur la base du résultat accumulé ; et
détermination de l'information de décalage de phase ou déphasage sur la base de la valeur de corrélation maximum obtenue par détection et correction du décalage de phase ou déphasage de fréquence desdites données reçues sur la base de l'information de décalage de phase ou déphasage détectée.

11. Procédé pour une correction de phase selon la revendication 10, dans lequel la valeur de corrélation maximum obtenue parmi lesdites première, seconde et troisième valeurs de corrélation est déterminée en tant que direction de décalage de phase ou déphasage temporaire des données reçues.

12. Procédé pour une correction de phase selon la revendication 10 ou 11, dans lequel, lorsque la valeur de corrélation maximum obtenue par détection est ladite seconde ou troisième valeur de corrélation, la phase de la fréquence desdites données reçues est retardée si ladite seconde valeur est la plus importante et la phase est avancée si ladite troisième valeur est la plus importante.
